# EUROPEAN PATENT APPLICATION

(11) **EP 0 581 379 A1**
(43) Date of publication of application: **02.02.1994**
(21) Application number: 93202177.7
(22) Date of filing: 23.07.1993
(51) Int. Cl.: F16L 29/00, F16L 37/30

(54) **Union for flexible pipes with automatic closure and separation in the event of strong tensile stress**

(30) Priority: 30.07.1992 IT MI921859
(71) Applicant: Bormioli, Giorgio, I-35100 Padova (IT)
(72) Inventor: Bormioli, Giorgio, I-35100 Padova (IT)
(74) Representative: Mittler, Enrico

(57) **Abstract**

A union for flexible pipes comprising an inlet part (1) fixed to an outlet part (2) automatically and axially removable in the event of strong tensile stress. These parts (1) and (2) have central aligned holes (7, 3, 30) designed to define an axial passage for the fluid, which is closed by a rotary hatch (8), contained in the part (1). Said hatch (8) is usually maintained in a position of opening of said passage and can be automatically moved in a position of closure of the same passage when the two parts (1, 2) of the union are separated.

## Description

The present invention relates to a union for flexible pipes, capable of automatically separating the joined pipes and closing the same in the event of strong tensile stress.

Unions of this type are used frequently in the oil industry for connecting a supply inlet, often situated at the bottom of the sea, with tank receiving inlets, generally situated on cargo ships.

The use of these unions is required due to the fact that poor weather conditions, rough seas, the passing of a second ship whose anchor becomes tangled in the pipe, may lead to the breakage or simply the interruption in the connection between the supply inlet and the receiving one. Without special devices, this interruption may lead to the leakage of large quantities of oil, with obvious consequences in terms of economic and environmental damage.

A fundamental requirement of these unions which are able to detach and close automatically consists in the selectivity in relation to the stress exerted; detachment and closure are in fact to be avoided in the case of tensile stresses lower than a predefined value and this value has to be independent of the fluid pressure and of the depth.

The Italian patent no. 1168925 describes a union of the abovementioned type, which comprises an external tubular casing fitted with a fixed inlet part and an axially removable outlet part, and an internal body containing a detachable connection system which, in response to a strong stress of reciprocal detaching of said parts of casing, causes, virtually simultaneously, the removal of said outlet part and the displacement of a shutter in a closure position of said inlet part.

In this union the fluid to be transferred is conveyed in the gap between the external tubular casing and the detachable connection system, whereby a strong loss of pressure occurs.

The object of the present invention is that of providing a union for flexible pipes, which is capable of performing fully automatically the separation and closure of the joined pipes in the event of strong tractive forces and which, at the same time, has reduced loss of pressure.

In accordance with the invention, this object is achieved by means of a union for flexible pipes with automatic closure and separation in the event of strong tensile stress, comprising a fixed inlet part and an axially removable outlet part, coaxially engaged one on the other and separably attached one to the other by detachable connection means until a predetermined axial tractive force value is exceeded, characterised in that said inlet and outlet parts have central aligned holes for defining an axial passage for the fluid, and said inlet part supports a rotary hatch usually maintained in a position of opening of said passage and automatically movable into a position of closure of the same passage at the moment of said separation of the two parts of the union.

Clearly in this way a union is provided which in normal working conditions is able to transfer large quantities of fluid rapidly and efficiently but which, in the event of strong tractive forces, enables the two pipes to be separated and the supply one to be closed (while the other one can usually be fitted with a nonreturn valve), avoiding breakage of the pipes or of other connection structures and the dispersion of large quantities of the transported fluid.

Appropriate means described subsequently are preferably provided in order to make the release stress independent of the fluid pressure and of the working depth.

These and other features of the present invention shall be made clearer by the following detailed description, illustrated by way of a non-limiting example in the accompanying drawings in which:
figure 1 represents an axial section of the union according to the invention in a rest condition;
figure 2 represents the same union, again in a rest condition, sectioned along line II-II of figure 1;
figure 3 represents a plan view from above, partially sectioned, of the same union, again in a rest condition;
figure 4 represents the same union, again in a rest condition, sectioned along line IV-IV of figure 3;
figure 5 shows in axial section the union according to the invention, represented in the phase corresponding to separation of the two parts of the union caused by strong traction;
figure 6 shows the union in plan from above, partially sectioned, in the separation phase of figure 5;
figure 7 shows in axial section the inlet part of the same union in the phase subsequent to separation;
figure 8 shows the same union again in axial section, represented in the moment in which the operations of reconnecting the union begin;
figure 9 shows the same union, in plan from above, partially sectioned, in the reconnection phase represented in figure 8;
figure 10 shows the same union, again in axial section, represented almost at the end of the operations of restoring the original operating conditions;
figure 11 shows in enlarged scale a detail of a device for reopening the hatch included in the abovementioned union, sectioned along line XI-XI of figure 9;
figure 12 represents the same detail of figure 11 at the moment the hatch returns to the reopening position.

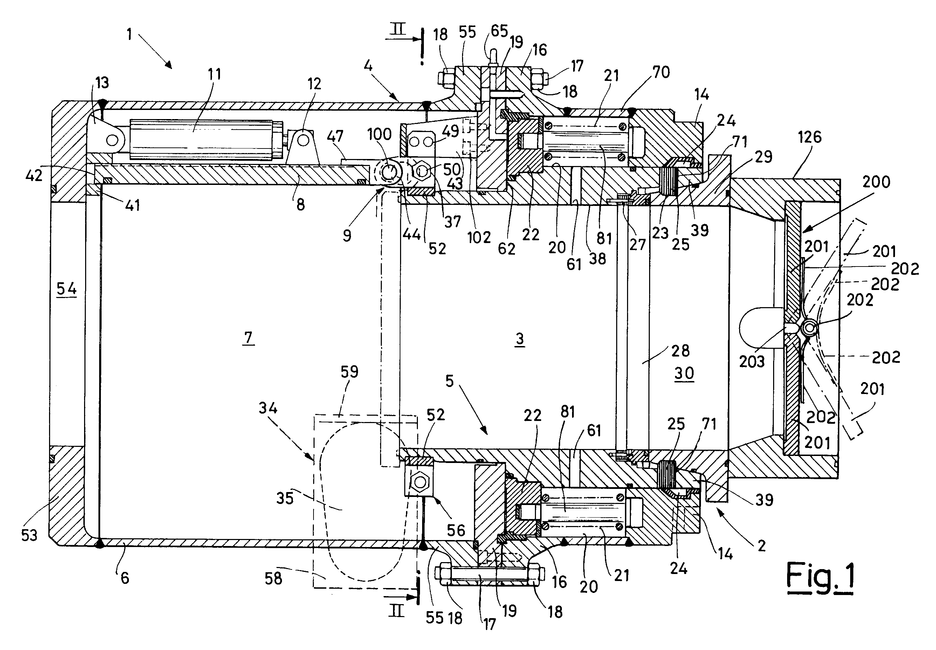

With reference to figure 1, the union according to the invention comprises two parts 1 and 2, both internally hollow and engageable one on the other, of which the first 1 forms the inlet part for the fluid in the union, and the second 2 forms the outlet part for the same, fitted with a nonreturn valve 200.

The part 1 consists in turn of two separate portions 4 and 5, of which the first 4 is fixed and the second 5 can be moved axially in relation to the first against the reaction of springs 21 which will be described hereinunder.

Said fixed portion 4 comprises an external containing wall 6, through which a cylindrical hole 7 is formed for the passage of the fluid to be transferred, and fitted with couplings 41 which define a housing space 42 for a rotary hatch 8, structured in the form of a disk and arranged, in normal operating conditions, in such a way that its relevant plane is parallel to the axis of the hole 7.

In a symmetrical position in relation to that of the space 42, the hatch 8 is fitted with hinges 9, which leave it free to rotate around an axis 44 perpendicular to the axis of symmetry of the hole 7.

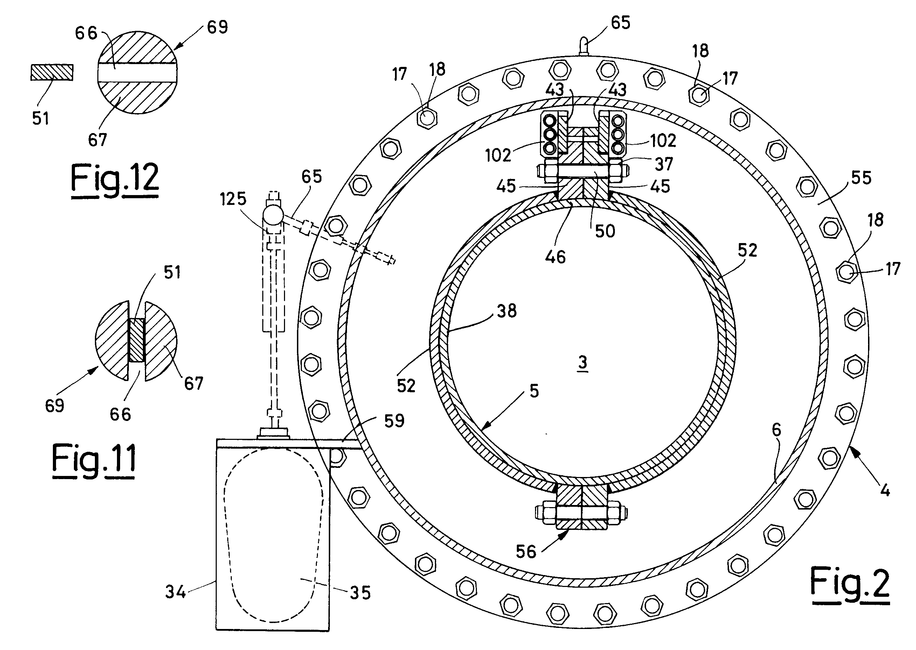

Referring to figures 1, 2, 3 and 4, said hinges 9 comprise a fork 43, which is made integral with the fixed portion 4 by means of screws 102 and houses, in an axial sliding manner, a pair of metal L-structured elements 45, placed side by side and fixed one to the other by means of a threaded bar 50 and nuts 37 and further screws 49 so as to achieve a single structure 46 which, together with a similar, diametrally opposed structure 56 (fig. 2), joins a pair of half-rings 52 one to the other and tightens them around a lateral cylindrical wall 38 of the mobile portion 5.

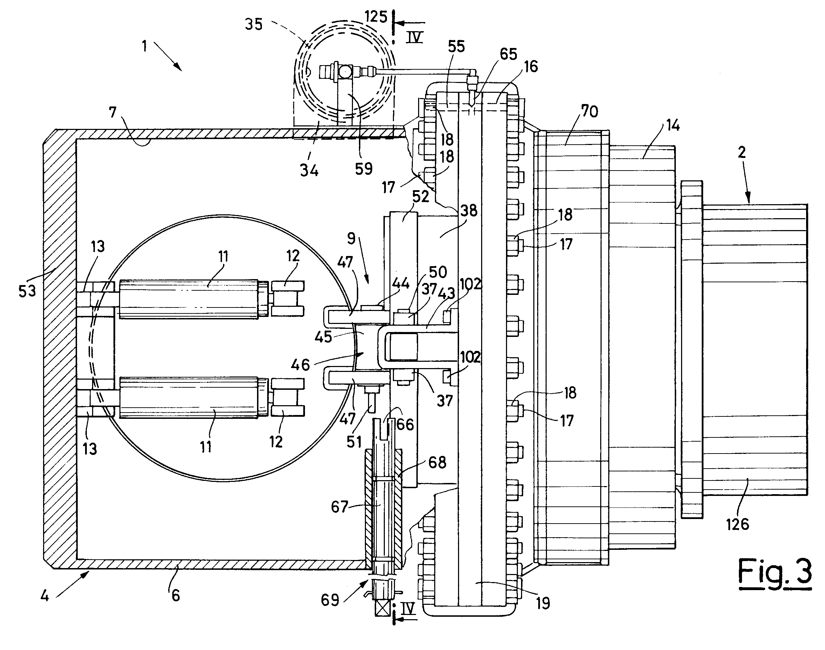

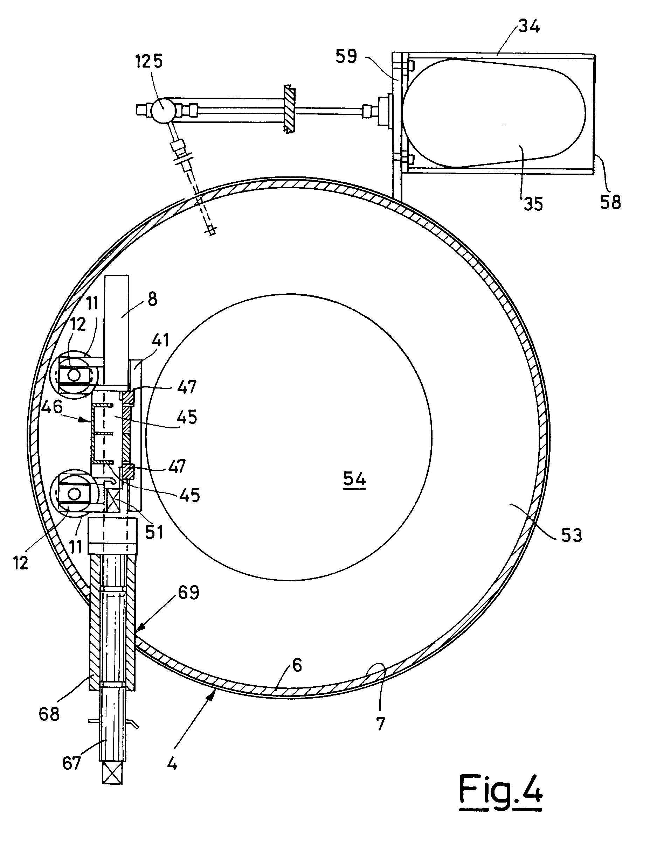

The abovementioned structure 46, at the axis 44, supports a rotary pin 100, on which a pair of brackets 47 are keyed, integral with the hatch 8. The pin 100 is also integral with an overhanging element 51 with a parallelepiped shape (figures 3 and 4).

Said hatch 8 moreover is connected by means of supports 12 to hydraulic dampers 11, connected in turn by means of similar supports 13 to an end wall 53 of the fixed portion 4, which is provided with an inlet hole 54.

The fixed portion 4 comprises moreover a lateral cylindrical wall 70 placed to extend from the wall 6 described previously and fixed thereto by means of threaded bars 17 and pairs of nuts 18 (figures 1-3) at respective facing flanges 16 and 55, with an annular plate 18 placed and clamped between them and mounted around the wall 38 of the mobile portion 5 so as to allow the latter to slide along the axis of the union.

An annular cavity 20, arranged so that its axis is parallel to that of the union, is situated between the lateral walls 70 and 38 of the portions 4 and 5 and transverse annular plates 14 and 22 of the abovementioned portions.

Said cavity 20 serves to house compression springs 21, which are mounted on respective support pegs 81 and react between the abovementioned annular plates 14 and 22, maintaining the Latter in contact with the fixed annular plate 19.

The cavity 20 communicates by means of radial conduits 61 with the internal space of the lateral wall 38 of the mobile portion 5, which defines a hole 3 aligned with the hole 7 of the fixed portion 4 and with a smaller diameter in respect thereof.

The annular area 62 between the plates 22 and 19 has the same area as the hole 3 for reasons of compensation of the pressure of the fluid and communicates in turn with a conduit 65 partially formed inside the plate 19 and fitted with a three-way valve 125 for the alternating connection with a device for feeding oil under pressure (not shown) or with a flexible pocket 35, also containing oil for compensating the thrust of the external pressure linked to the working depth. The latter is inserted inside a container 34 with a parallelepiped shape, which is open at one end 58 and is connected to the remaining part of the union by means of a support rod 59.

The lateral wall 38 of the mobile portion 5 has, in proximity to the outlet part of the union, a conically flared portion 39 designed to aid coupling of the outlet part 2 with the inlet part 1. It moreover has a mobile seat 28 pushed by an annular series of stacks of Belleville washers 27 to act as a hydraulic seal element between the inlet part 1 and the outlet part 2.

Said part 2 comprises a lateral wall 29, which is externally flared in a complementary manner to the abovementioned conical portion 39 of the part 1 and forms internally a cylindrical passage 30 with a diameter equal to that of the hole 3 and whereto it is fixed rigidly by means not shown to an extension 126 fitted with said nonreturn valve 200.

The latter comprises two semicircular blades 210, free to rotate around an axis 203, coinciding with their common diameter and forced into a position of complete closure by a spring 202 until the pressure of the fluid fed into the hole 3 causes it to open (position represented by dots and lines in figure 1).

The reciprocal locking 1 between the inlet part 1 and the outlet part 2 of the union according to the invention is ensured by the presence of pawls 25, housed in a radial sliding manner in radial notches 71 of the flared end 39 of the mobile portion 5.

Said pawls are generally situated, during the normal working phases, in a corresponding annular notch 23, formed in the lateral wall 29 of the outlet part 2, although they are able to come out of the notch 23 to be inserted in a further annular notch 24 of the annular plate 14 of the fixed portion 4 in the case of axial sliding of the coupled parts 2 and 5 in relation to the portion 4 following strong axial traction, as will be explained hereinunder.

With reference to figure 3, the union according to the present invention is provided with a drive device 69, positioned at the hinges 9 and used to restore the working conditions of the union itself.

Said drive device 69 comprises an external guide 68, integral with the portion 4 and a cylindrical shaft 67, longitudinally rotary and mobile, which extends from the inside to the outside of the union in question. It has a seat 66 on the end turned inwards for housing the overhanging element 51, consisting of a groove which cuts the cylindrical bar 67 along a diameter of its section.

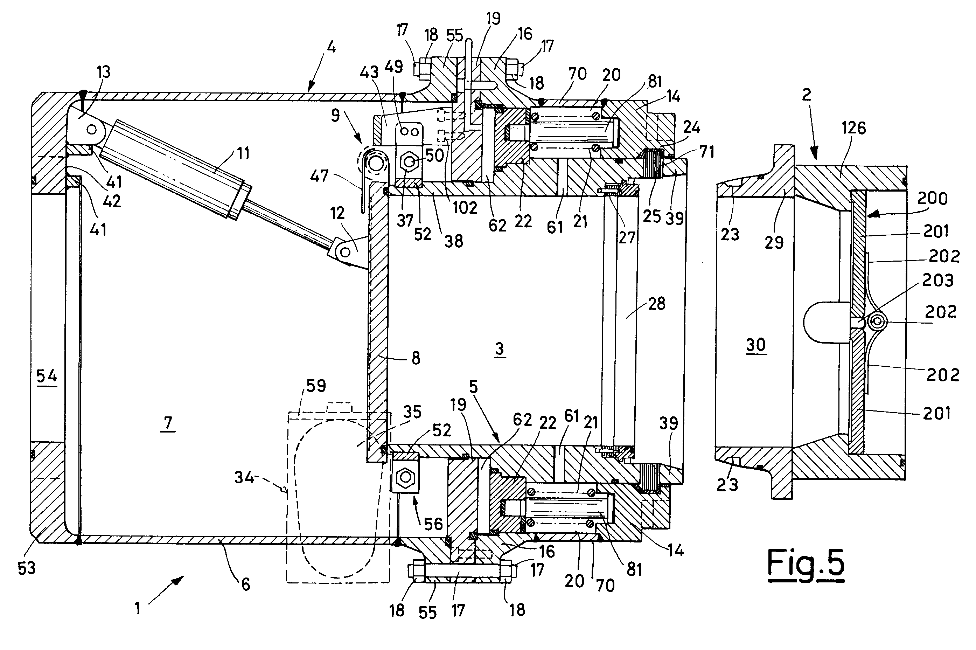

With reference to figures 5-12 of the accompanying drawings, the union according to the present invention operates as follows.

In rest conditions (figures 1, 2, 3 and 4), as in normal working conditions with fluid fed into the axial passage 7, 3, 30 and nonreturn valve 200 open, the two inlet 1 and outlet 2 parts are engaged one on the other with the holes 7, 3 and 30 aligned. The closure hatch 8 is in an axial position and therefore leaves the passage between the hole 7 and the hole 3 open. The hatch 8 is maintained in a position of opening of the communication between the holes 7 and 3 by the presence of the space 42, which houses a portion of said hatch 8, blocking its movements by means of the supports 41.

The outlet part 2 is hooked to the inlet part 1 by means of the pawls 25, fixed by jointing in the notch 23.

The drive shaft 67 is in a backward position in relation to the overhanging element 51, in relation whereto it has corresponding parallel, but not aligned, surfaces.

The springs 21, whose task is to maintain united said portions of inlet 1 and of outlet 2, are precompressed so as to contrast any tractive forces and ensure that normal working operations are maintained until a minimum value of intensity of axial traction is exceeded, said value being set by the preloading force of the springs 21 themselves. This minimum value is moreover independent of the depth at which the union operates; in fact, in addition to the preloading force and possible tractions, the springs 21 are subjected to two forces in opposite directions, both dependent on the depth, whose overall action is one of complete compensation of the effects linked to this parameter.

Said forces are exerted on the springs 21 by acting on the right and left face respectively (with reference to figure 1) of the transverse annular plate 22, which acts as a piston contrasted by said springs 21.

The first of said forces is exerted on the right face of the plate 22 by the fluid which circulates inside the union and which is fed into the cavity 20 through the conduits 61 formed in the mobile portion 5. This force depends on the pressure to which the fluid itself is subjected and, therefore, is closely linke to the depth at which this fluid is transferred.

The second of said forces is exerted on the left face of the plate 22 by the oil fed at the annular area 62 by means of the conduit 65 connected to the compensation pocket 35, whose pressure depends on the depth at which the pocket itself is situated.

In the case of axial traction whose intensity is higher than the preloading force of the springs 21, the outlet part 2 is forced to perform a movement to the right in which it also pulls the mobile portion 5 and, with it, the assembly of the pawls 25. The movement of said pawls 25 in relation to the portion 4 causes the same to come out of the annular notch 23 and to approach the annular notch 24.

The movement to the right of the portion 5 is accompanied by a similar movement of the closure hatch 8, connected to the portion 5 by means of the hinges 9.

This movement of the closure hatch 8 causes the latter to come out of the housing space 42 which maintains it in a horizontal position thanks to the support provided by the couplings 41.

The closure hatch 8, no longer restrained, then begins to move through the effect of the force of its own weight and through the effect of the pressure of the fluid, rotating around the axis 44.

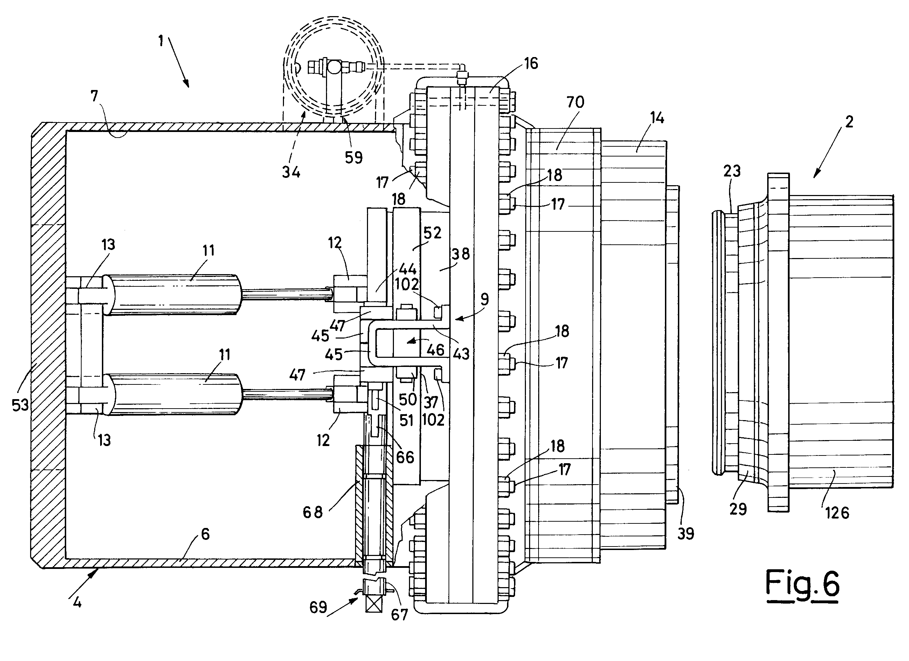

The rotation is controlled by the hydraulic dampers 11 and ends on reaching the closure position, corresponding to a rotation equal to a right angle (figures 5 and 6).

The reaching of the notch 24 by the pawls 25 causes the latter to come out of the annular notch 23 completely and hence the separation of the outlet part 2 from the inlet part 1. The nonreturn valve 200 at this point brings about closure of the outlet part 2.

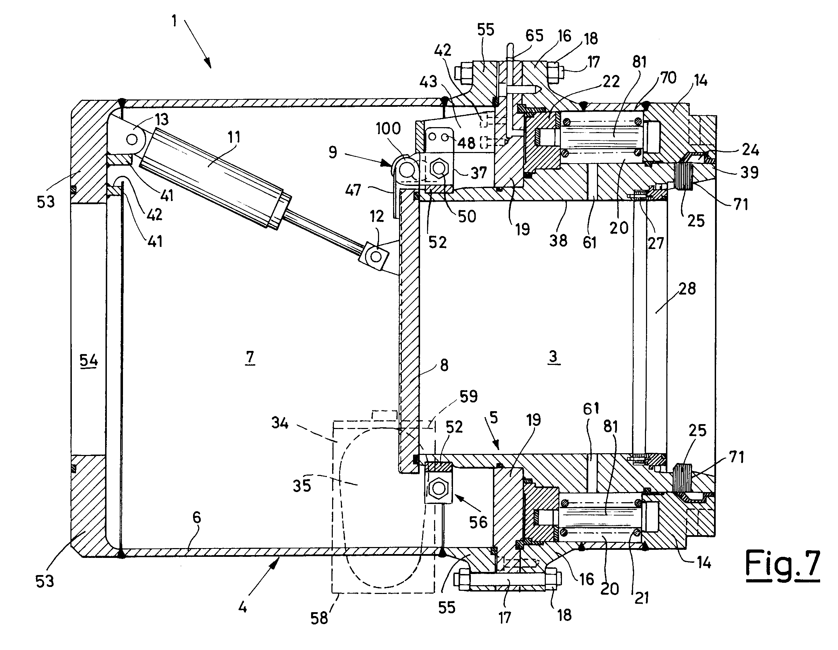

Following this separation, which is facilitated by the conical coupling of the walls 39 and 29, as described in greater detail in the previous European patent application no. 92203116.6 dated 9.10.1992, the mobile portion 5 is no longer subjected to any tractive force, whereas it is subjected to the returning action of the springs 21 which bring said portion 5 back to its initial position (figure 7).

It only remains to be explained how the union can be used again following separation of its inlet 1 and outlet 2 parts and the closure of the inlet part 1.

The operations of restoring the working conditions of the union begin with the engaging of the outlet part in the inlet part 1, by means of the special shape of the flared portions 29 and 39 of the two abovementioned parts.

At this stage, using the three-way valve 125, the conduit 65 is connected to a device for feeding oil (not shown), which feeds oil under pressure into the annular area 62.

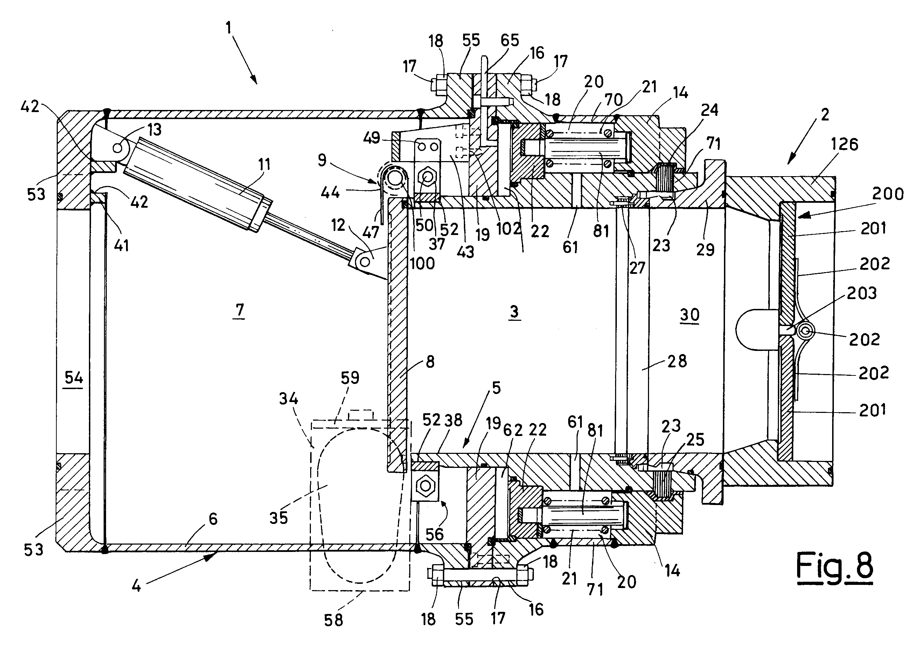

In this way the springs 21 are compressed and the mobile portion 5 is moved to the right and, consequently, the closure hatch 8 (figure 8). The pawls 25 can therefore be inserted in the annular notch 24 of the fixed portion 4 of the inlet part 1 (figure 8) to allow the complete coupling of the outlet part 2 with consequent reverse movement of the pawls 25 into the annular notch 23 of the outlet part 2.

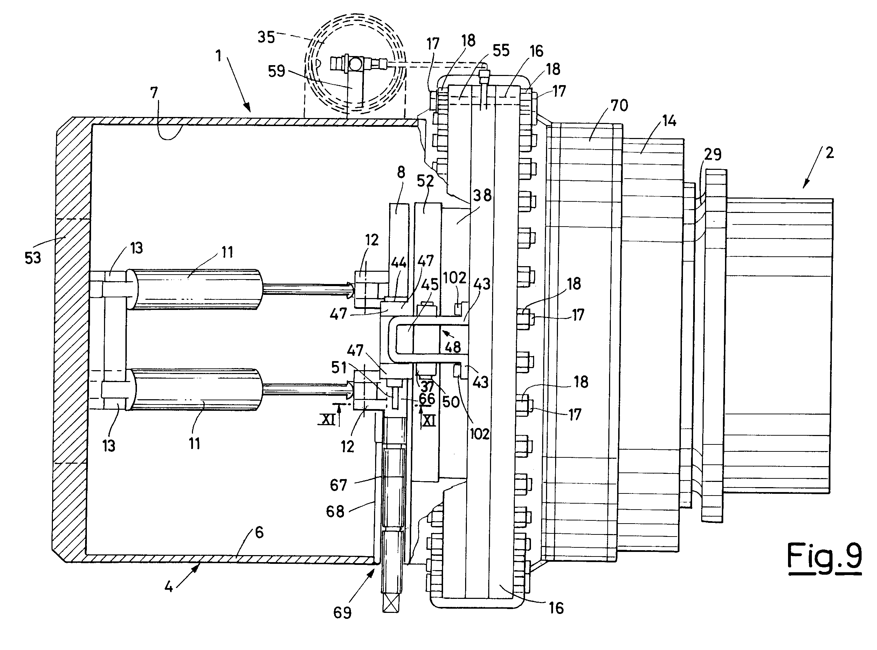

The movement of the hatch 8 together with the mobile portion 5 in turn leads to the aligning of the complementary surfaces of the overhanging element 51 and of the drive shaft 67. The latter is then pushed axially towards the overhanging element 51 until it engages its housing seat 66 on the same (figure 9).

The position of the overhanging element 51 and of the housing seat 66 is represented in figure 11. In this position the disengagement of the overhanging element 51 from the housing seat 66 is made impossible by the perpendicularity of the seat 66 in relation to the axis of the union.

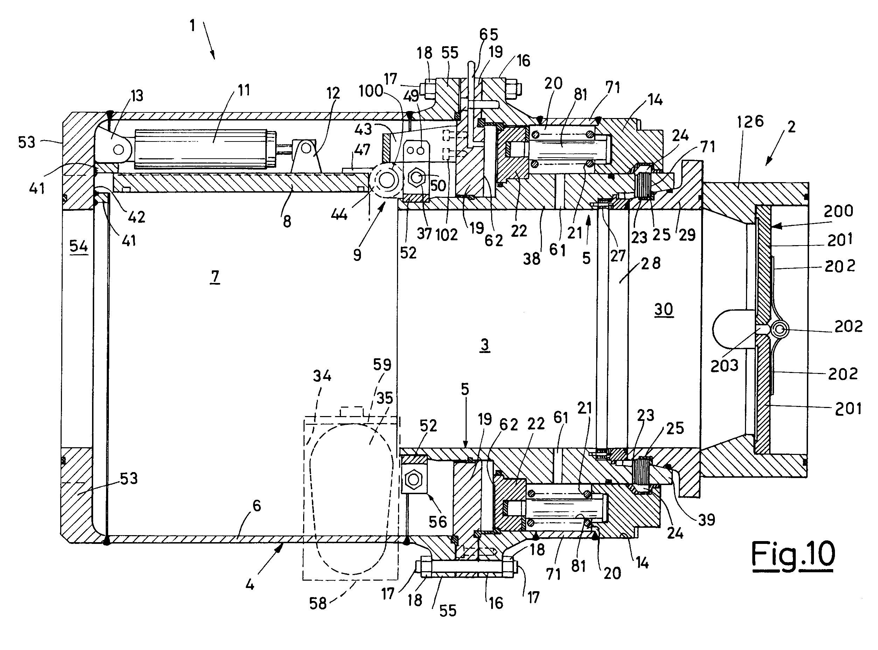

The coupling between said overhanging element 51 and said seat 66 enables, by means of a mechanical action of rotation of the shaft 67 of the drive device 69, the closure hatch 8 to rotate until it returns to the horizontal position corresponding to the opening of the passage 7, 3 and 30 (figure 10).

The position of the overhanging element 51 and of the housing seat 66 after rotation through a right angle is represented in figure 12. After the rotation, the disengagement of the overhanging element 51 from the housing seat 66 is made possible by the parallel arrangement of the seat 66 in relation to the axis of the union.

The phase immediately following consists in interrupting the feed of oil under pressure into the conduit 65. This results in a decrease of the force exerted on the left face of the plate 22 and, therefore, on the springs 21. The mobile portion 5 is therefore pushed by the springs 21 towards the position occupied originally, blocking the pawls 25 inside the notch 23 of the outlet part 2 and drawing the hatch 8 towards the space 42. The movement to the left of the hatch 8 brings the overhanging element 51 to disengage from the housing space 66 of the drive shaft 67 in which it was housed (figure 12).

Finally the drive shaft 67 is made to rotate once again by an action from the outside. Once the connection has been made, the pressure of the fluid in the inlet part 1 pushes the shaft 67 towards the outside of the union, thus completing restoration of the initial conditions (figures 1, 2, 3 and 4).

## Claims

1. Union for flexible pipes with automatic closure and separation in the event of strong tensile stress, comprising a fixed inlet part (1) and an axially removable outlet part (2), coaxially engaged one on the other and separably attached one to the other by disengageable connection means (25, 23) until a predetermined axial tractive force is exceeded, characterised in that said inlet (1) and outlet (2) parts have central aligned holes (7, 3, 30) designed to define an axial passage for the fluid, and said inlet part (1) supports a rotary hatch (8) usually maintained in a position of opening of said passage and automatically movable into a position of closure of the same passage when the two parts (1, 2) of the union separate.

2. Union according to claim 1, characterised in that the inlet part (1) consists of two portions (4, 5) of which one (4) is fixed and one (5) can be moved along the axial direction following axial traction.

3. Union according to claim 2, characterised in that said fixed portion (4) comprises an external cylindrical wall (6), which defines an axial hole (7) and is fitted with couplings (41) for defining a space for housing and support (42) for said closure hatch (8).

4. Union according to claim 3, characterised in that said closure hatch (8) is provided with hinges (9), carried by said mobile portion (5), which leaves it free to rotate around an axis (44) perpendicular to the axis of symmetry of said hole (7), when said hatch (8) is disengaged from said space (42) following axial movement of said mobile portion (5).

5. Union according to claim 3, characterised in that said hatch (8) is fitted with dampers (11) connected to said fixed portion (4) of the inlet part (1).

6. Union according to claim 4, characterised in that said hatch (8) is fitted with a reopening system comprising a drive shaft (69) provided with a groove defining a housing seat (66) for an overhanging element (51) integral with a rotation pin (100) of said hatch (8).

7. Union according to claim 2, characterised in that said mobile portion (5) is subjected to the action of precompressed springs (21) housed in cavities (20) with axis parallel to the axis of said passage (7, 3, 30), arranged annularly inside said fixed portion (4) and reacting between a first and second transverse plate (14, 22), integral with said fixed portion (4) and with said mobile portion (5) respectively.

8. Union according to claim 7, characterised in that said second transverse plate (22) is normally subjected to the contrary action of a fluid contained in a containing pocket (35).

9. Union according to claim 8, characterised in that said cavities (20) are hydraulically connected to said axial passage of the union, so that on said second transverse plate (22) a force cooperates with said springs (21) caused by the pressure of the fluid passing through the union.

10. Union according to claim 8, characterised in that said containing pocket (35) consists of a flexible pocket containing oil, inserted in a container (34) outside of the union, but connected thereto hydraulically and joined by means of a support rod (59).

11. Union according to claim 8, characterised in that said second transverse plate (22) is further subjectable to the action of a fluid under pressure for overcoming the action of said springs (21) for bringing said mobile portion (5) back to a suitable position for rehooking said inlet (1) and outlet (2) parts and reclosing said hatch (8) after they have been separated.

12. Union according to claim 1, characterised in that said disengageable connection means (25, 23) comprise a plurality of pawls (25) housed in a radially sliding manner in radial notches (71) of a conically flared end (39) of said mobile portion (5) and normally situated in corresponding radial notches (23) formed in a complementarily flared end (29) of the outlet part (2) and maintained there until a predetermined axial tractive force is exceeded to cause said pawls (25) to come out of said notches (23) and said parts (1, 2) of the union to separate axially.

13. Union according to claim 12, characterised in that it comprises a hydraulic seal ring (28) supported in an axially mobile manner by said mobile portion (5) of the inlet part (1) and forced elastically to engage as a hydraulic seal against the front of said flared end (29) of the outlet part (2).
